# EUROPÄISCHE PATENTSCHRIFT

(11) **EP 2 295 347 B1**
(45) Veröffentlichungstag und Bekanntmachung des Hinweises auf die Patenterteilung: **21.01.2015**
(21) Anmeldenummer: 10172199.1
(22) Anmeldetag: 06.08.2010
(51) Int. Cl.: B65G 1/137, B65G 47/51

(54) **Vorrichtung und Verfahren zum Beladen eines Gebindespeichers**
Method and device for loading a buffer rack with packages
Procédé et dispositif destinés au chargement d'un dispositif de stockage tampon de paquets

(30) Priorität: 11.09.2009 DE 102009041238
(43) Veröffentlichungstag der Anmeldung: 16.03.2011
(73) Patentinhaber: Krones AG, 93073 Neutraubling (DE)
(72) Erfinder: Tiebel, Peter, 93077, Bad Abbach (DE); Wünsche, Dieter, 94315, Straubing (DE)
(74) Vertreter: Grünecker, Kinkeldey, Stockmair & Schwanhäusser

(56) Entgegenhaltungen:
- EP-A2- 0 043 428
- DE-U1-202007 016 549
- US-A- 4 708 252
- US-B1- 6 425 226
- US-B2- 7 363 104

## Beschreibung

Die Erfindung betrifft eine Vorrichtung und ein Verfahren zum Beladen eines Gebindespeichers einer Kommissionieranlage mit Gebinden, insbesondere Gebinden eines oder mehrerer Getränkeartikel nach dem Oberbegriff der Ansprüche 1 und 6.

Insbesondere in der Getränkeindustrie werden häufig Gebinde eines oder mehrerer Getränkeartikel kundenspezifisch auf einer Palette kommissioniert. Dazu ist es erforderlich, Verbände von Gebinden, insbesondere Paletten, zu depalettieren und die Gebinde einem Gebindespeicher zuzuführen. Die im Gebindespeicher gelagerten Gebinde können daraufhin zur Sequenzbildung und Palettierung, d.h. zur Kommissionierung, auf Basis eines Kundenauftrages verwendet werden.

Das Beladen des Gebindespeichers ausgehend von Verbänden von Gebinden, insbesondere Paletten, geschieht üblicherweise automatisch. Die automatische Beladung des Gebindespeichers erfordert jedoch einen hohen Aufwand sowohl hinsichtlich der notwendigen mechanischen Installationen als auch hinsichtlich der Kosten im Bereich der Anlagensteuerung und der Daten- und Bestandsverwaltung der Gebinde. So können die Kosten für die automatische Beladung eines Gebindespeichers bis über 30% der Gesamtkosten für ein automatisches Kommissioniersystem betragen.

Das Dokument EP 0043428 A offenbart eine Vorrichtung und ein Verfahren nach dem Oberbegriff der Ansprüche 1 und 6.

Daher ist es Aufgabe der vorliegenden Erfindung, eine Vorrichtung und ein Verfahren zum Beladen eines Gebindespeichers mit Gebinden, insbesondere Gebinden eines oder mehrerer Getränkeartikel, bereitzustellen, welches einen geringeren Aufwand an mechanischen und/oder elektronischen Installationen erfordert. Diese Aufgabe wird gelöst durch den Gegenstand der Patentansprüche 1 und 6.

Das erfindungsgemäße Verfahren zum Beladen eines Gebindespeichers einer Kommissionieranlage mit Gebinden, insbesondere Gebinden eines oder mehrerer Getränkeartikel, umfasst die Schritte des Anspruchs 1.

Durch das manuelle Beladen des Gebindespeichers durch eine oder mehrere Bedienpersonen kann der Aufwand an notwendigen mechanischen und/oder elektronischen Installationen reduziert werden. Dadurch kann es auch zu einer Reduktion der Herstellungskosten eines Kommissioniersystems kommen.

Der Verband von Gebinden kann insbesondere eine Palette, beispielsweise eine Produktionspalette oder Quellpalette, ein Trolley oder eine Gitterbox sein.

Die Kommissionieranlage kann einem maschinellen Kommissioniersystem entsprechen. Die Kommissionieranlage kann wenigstens teilweise automatisiert sein. Insbesondere kann die Kommissionieranlage derart ausgebildet sein, dass ein Kommissionierauftrag zum Bilden einer Sequenz von Gebinden automatisch verarbeitet wird, d.h. dass die Sequenz von Gebinden automatisch gebildet wird, insbesondere aus im Gebindespeicher gespeicherten Gebinden. Die gebildete Sequenz von Gebinden kann auf einem weiteren Verband von Gebinden, beispielsweise einer Zielpalette, angeordnet oder palettiert werden.

Beispielsweise kann ein Kunde eine Palette umfassend Gebinde unterschiedlicher Getränkeartikel, beispielsweise umfassend Wasser, Fruchtsaft und/oder alkoholische Getränke wie etwa Bier, in Auftrag geben. Dieser kundenspezifische Auftrag kann dann durch die Kommissionieranlage automatisch oder teilautomatisch bearbeitet werden. Mit anderen Worten erstellt die Kommissionieranlage den weiteren Verband von Gebinden automatisch oder teilautomatisch aus im Gebindespeicher gespeicherten Gebinden.

Der weitere Verband von Gebinden kann insbesondere eine Palette, beispielsweise eine Zielpalette, ein Trolley oder eine Gitterbox sein.

Der weitere Verband von Gebinden, beispielsweise die kundenspezifische Palette oder Zielpalette, kann ein Verband aus mehreren unterschiedlichen Gebinden, insbesondere eine gemischte Palette sein, insbesondere durch Vorgaben von einem oder mehreren Kundenaufträgen oder durch Vorgaben von einem oder mehreren Aufträgen zur Unterstützung weiterer interner wie externer Geschäftsprozesse, insbesondere Verteilen, Montieren, Umpacken, Konfektionieren, Kommissionieren, etc..

Ein Gebinde kann der Gesamtheit aus Packgut und Verpackung entsprechen. Insbesondere kann ein Gebinde eines Getränkeartikels einem Getränk und der zugehörigen Verpackung entsprechen. Ein Gebinde kann auch einem Großgebinde entsprechen, wobei ein Großgebinde eine Mehrzahl von Einzelgebinden umfasst. Beispielsweise kann es sich bei einem Gebinde um eine Getränkekiste mit Flaschen, die mit einem Getränk gefüllt sind, handeln. Ein Gebinde kann auch ein Karton oder ein Shrink-Pack sein.

Die Gebinde können Gebinde eines oder mehrerer Getränkeartikel und/oder Lebensmittel, Handelsprodukte und/oder Behälter und Pakete im Allgemeinen sein.

Ein Verband von Gebinden, beispielsweise eine Produktionspalette, kann artikelrein sein. Mit anderen Worten kann eine Verband von Gebinden Gebinde eines einzigen Artikels, beispielsweise Getränkeartikels, umfassen. Es können mehrere, insbesondere zwei oder mehr, Verbände von Gebinden, insbesondere Paletten, bereitgestellt werden, insbesondere wobei jede der bereitgestellten Verbände von Gebinden artikelrein ist. Unterschiedliche Verbände von Gebinden können Gebinde unterschiedlicher Getränkeartikel umfassen. Dadurch kann der Gebindespeicher mit Gebinden unterschiedlicher Getränkeartikel beladen werden.

Alternativ oder zusätzlich können die Verbände von Gebinden auch Gebinde unterschiedlicher Artikel, insbesondere unterschiedlicher Getränkeartikel, umfassen. Insbesondere kann das Bereitstellen der wenigstens einen Verband von Gebinden ein Anordnen von Gebinden unterschiedlicher Artikel, insbesondere unterschiedlicher Getränkeartikel, auf oder in dem Verband von Gebinden umfassen.

Ein Gebindespeicher oder Gebindepuffer kann dem Speichern und/oder Zwischenspeichern von Gebinden dienen. Der Gebindespeicher kann insbesondere eines oder mehrere Speicherelemente umfassen, wobei in jedem Speicherelement eines oder mehrere Gebinde eines Getränkeartikels gespeichert werden können. Mit anderen Worten können für Gebinde unterschiedlicher Getränkeartikel unterschiedliche Speicherelemente vorgesehen sein.

Der Gebindespeicher kann wenigstens eine Speicherbahn umfassen. Mit anderen Worten kann ein Speicherelement des Gebindespeichers einer Speicherbahn entsprechen. Eine Speicherbahn ist derart ausgebildet und/oder angeordnet , dass ein Gebinde darauf angetrieben und/oder durch das Eigengewicht des Gebindes weitertransportiert werden kann, insbesondere zu einem vorgesehenen oder vorherbestimmten Bereich der Speicherbahn. Eine Förderbahn kann insbesondere einem Rollförderer oder einer Rollenbahn entsprechen. Eine Speicherbahn kann einer schiefen Ebene entsprechen oder in einer schiefen Ebene angeordnet sein. Mit anderen Worten kann die Speicherbahn einen Winkel mit der Horizontalen einschließen, der größer als 0°, insbesondere größer als 2° ist.

Der Gebindespeicher kann mehrere, vertikal übereinander angeordnete Ebenen umfassen. Insbesondere kann jede der vertikal übereinander angeordneten Ebenen wenigsten eine Speicherbahn umfassen. Es können insbesondere zwei oder mehr, insbesondere drei, vertikal übereinander angeordnete Ebenen vorgesehen sein. Die Ebenen des Gebindespeichers, insbesondere die in den Ebenen angeordneten Speicherbahnen können derart ausgebildet sein, dass sie für eine Bedienperson oder einen Werker ergonomisch erreichbar sind. Insbesondere können die Bahnlängen der Speicherbahnen derart gewählt werden, dass die Speicherbahnen der übereinanderliegenden Ebenen im Bereich einer Bedienperson abgestuft ausgeführt sind. Die Speicherbahnen können derart abgestuft angeordnet sein, dass ein Ablegen der Gebinde durch die eine oder mehrere Bedienpersonen an der Beladeposition von schräg oben möglich ist.

Der vertikale Abstand zwischen zwei vertikal übereinander angeordneten Ebenen des Gebindespeichers kann der maximal zu handhabenden Gebindehöhe entsprechen.

Der Gebindespeicher, insbesondere die Speicherbahnen der Gebindespeicher, umfasst wenigstens ein Aufnahmeelement zum Aufnehmen des wenigstens einen Gebindes von einer oder mehreren Bedienpersonen. Dadurch kann ein gezieltes und ausgerichtetes Beladen des Gebindespeichers ermöglicht werden. Beispielsweise kann das Aufnahmeelement einer Arbeitsplatte, insbesondere einer Arbeitsplatte aus gleitfreudigem Material, entsprechen. Gleitfreudig kann hier bedeuten, dass die Haftreibung und/oder die Gleitreibung des verwendeten Materials gering ist, insbesondere sodass Gebinde durch geringen Kraftaufwand und/oder durch das Eigengewicht des Gebindes bewegt werden können.

Alternativ oder zusätzlich kann das Aufnahmeelement einem Kugeltisch oder einer ähnlichen rollenden Vorrichtung entsprechen. Das Aufnahmeelement kann eine, insbesondere einstellbare, seitliche Gebindeführung umfassen. Die Einstellung der Gebindeführung kann entsprechend den Abmessungen des der Speicherbahn zugeordneten Gebindes erfolgen.

Das Aufnahmeelement kann eine Aufsetzhilfe umfassen oder einer Aufsetzhilfe entsprechen, wobei die Aufsetzhilfe derart ausgebildet ist, dass sie das Einbringen des Gebindes in den Gebindespeicher, insbesondere in eine Speicherbahn, für eine Bedienperson erleichtert. So umfasst das Aufnahmeelement eine seitliche Gebindeführung, so ausgebildet und/oder angeordnet sein, dass das Gebinde mit einem definierten Winkel zur Laufrichtung ausgerichtet werden kann (eine leichte Verdrehung kann auf der Fördertechnik zu einem besseren Transport führen), und/oder dass dem Gebinde eine definierte oder vorherbestimmte Startpositionierung auf der Speicherbahn gegeben oder zugeordnet werden kann.

Das Aufnahmeelement kann in Form einer Schublade ausgebildet sein. Das Aufnahmeelement kann einem Gebindepusher, insbesondere einem manuellen Gebindepusher entsprechen oder einen Gebindepusher umfassen. Ein Gebindepusher kann verwendet werden, um ein Gebinde aus der Ruheposition in Bewegung zu versetzen. Mit anderen Worten kann der Gebindepusher einen Impulsübertrag auf ein Gebinde ermöglichen oder erleichtern. Dadurch kann der Impuls, mit dem das Gebinde in die Speicherbahn geleitet wird, gesteuert oder festgelegt, insbesondere auf einen vorherbestimmten Wert festgelegt, werden.

Das Bereitstellen des wenigstens einen Verbandes von Gebinden kann ein Anfordern des wenigstens einen Verbandes von Gebinden, insbesondere durch eine oder mehrere Bedienpersonen, umfassen. Das Anfordern des wenigstens einen Verbandes von Gebinden kann vollständig oder teilweise automatisiert erfolgen. Insbesondere können eine oder mehrere Bedienpersonen den Nachschub steuern und/oder Vorgaben zu Bedarf und Mengen für Pufferbahnen oder Speicherbahnen oder Entnahmeplätzen bekommen und diese gegebenenfalls kommentieren oder bestätigen. Die eine oder mehreren Bedienpersonen können der einen oder mehreren Bedienpersonen zum manuellen Beladen entsprechen.

Das Verfahren kann außerdem ein Bereitstellen einer Arbeitsfläche für die eine oder mehreren Bedienpersonen umfassen, wobei die Arbeitsfläche derart angeordnet und/oder ausgebildet ist, dass die eine oder mehreren Bedienpersonen den Gebindespeicher mit dem wenigstens einen Gebinde von dem wenigstens einen Verband von Gebinden manuell beladen können. Insbesondere kann die Arbeitsfläche zwischen dem Gebindespeicher und dem wenigstens einen Verband von Gebinden angeordnet sein.

Es können auch mehrere Arbeitsflächen oder Arbeitsbereiche bereitgestellt werden. Die Arbeitsbereiche für Bedienpersonen können auch mehrfach übereinander angeordnet werden. Insbesondere können mehrere Arbeitsflächen, Speicherbahnen und Bereitstellungsplätze für Verbände von Gebinden nebeneinander und/oder übereinander angeordnet werden.

Das Verfahren kann außerdem ein automatisiertes Weiterverarbeiten der Gebinde nach dem manuellen Beladen umfassen. Das Verfahren kann insbesondere einen automatischen oder automatisierten Weitertransport des Gebindes nach dem manuellen Beladen umfassen.

Die Erfindung stellt außerdem eine Vorrichtung zum Beladen eines Gebindespeichers einer Kommissionieranlage mit Gebinden nach Anspruch 6.

Der Gebindespeicher kann mehrere, vertikal übereinander angeordnete Ebenen umfassen.

Weitere Merkmale und Vorteile werden nachfolgend anhand der beispielhaften Figuren erläutert. Dabei zeigt
- Figur 1: eine Draufsicht eines beispielhaften Systems umfassend einen beispielhaften Gebindespeicher und eine beispielhafte Vorrichtung zum Beladen des Gebindespeichers; und
- Figur 2: eine Seitenansicht eines beispielhaften Systems umfassend einen beispielhaften Gebindespeicher und eine beispielhafte Vorrichtung zum Beladen des Gebindespeichers.

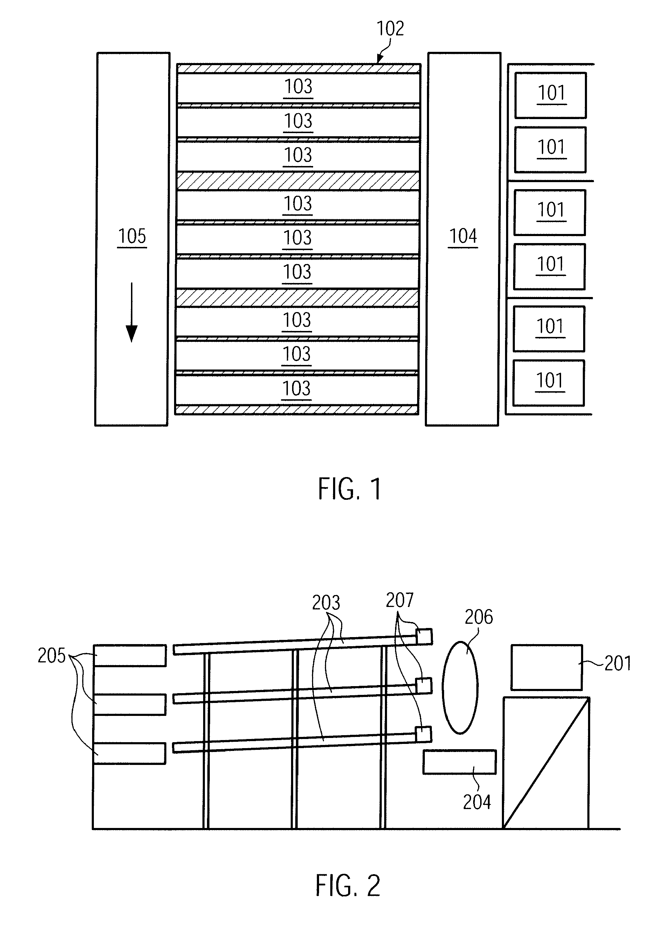

Figur 1 illustriert ein Verfahren zum Beladen eines Gebindespeichers anhand eines beispielhaften Systems umfassend einen Gebindespeicher 102, Verbände von Gebinden 101 und eine zwischen dem Gebindespeicher 102 und den Verbänden von Gebinden 101 angeordnete Arbeitsfläche 104, auf der aus eine Bedienperson den Gebindespeicher 102 mit wenigstens einem Gebinde von einem der Verbände von Gebinden 101 manuell beladen kann. Figur 1 zeigt außerdem ein Fördermedium 105, mit welchem aus dem Gebindespeicher 102 entnommene Gebinde zur weiteren Verarbeitung weitertransportiert werden können.

Die Verbände von Gebinden können insbesondere Produktionspaletten sein.

Das in Figur 1 gezeigte beispielhafte System kann Teil eines Kommissioniersystems sein, mit welchem Gebinde kundenspezifisch auf einer Palette kommissioniert werden können. Es werden beispielhaft Gebinde eines oder mehrerer Getränkeartikel verwendet, es können jedoch grundsätzlich auch Gebinde anderer Artikel verwendet werden.

Der Gebindespeicher 102 umfasst mehrere Speicherbahnen 103. Eine Bedienperson kann die Speicherbahnen 103 artikelrein beladen. Mit anderen Worten kann die Bedienperson jede der Speicherbahnen 103 mit Gebinden von nur einem einzigen Getränkeartikel beladen. Unterschiedliche Speicherbahnen 103 können jedoch mit Gebinden unterschiedlicher Getränkeartikel beladen werden. Unterschiedliche Speicherbahnen 103 können auch mit Gebinden identischer Artikel, insbesondere Getränkeartikel beladen werden.

Eine Speicherbahn 103 kann auch mit Gebinden unterschiedlicher Artikel beladen werden. Eine oder mehrere Bedienpersonen können Gebinde eines Verbandes von Gebinden 101 gemäß eines oder mehrerer Kommissionieraufträge und/oder gemäß der Verwendung der Gebinde der Verbände von Gebinden in den Speicherbahnen 103 anordnen.

Die Speicherbahnen 103 können seitliche Führungselemente umfassen, so dass Gebinde auf den Speicherbahnen 103 seitlich geführt werden können.

Figur 2 zeigt das beispielhafte System aus Figur 1 in einer Seitenansicht. Dabei weist das System in Figur 2 mehrere vertikal übereinander angeordnete Ebenen auf, wobei jede der Ebenen wenigstens eine Speicherbahn 203 umfasst. Die mögliche Anzahl der Ebenen kann sich aus den konstruktiven Gegebenheiten des Gebindespeichers, beispielsweise Bauhöhen innerhalb des Gebindespeichers sowie in der nachgelagerten Gebindefördertechnik, ergeben. Figur 2 zeigt drei übereinander angeordnete Ebenen. Jede der in Figur 2 gezeigten Ebenen umfasst wenigstens eine Speicherbahn 203. Einer jeden Speicherbahn 203 ist ein Fördermedium 205 nachgelagert, welches es erlaubt, von der Speicherbahn 203 entnommene Gebinde teilautomatisiert oder automatisiert weiterzutransportieren.

Jede der Speicherbahnen 203 umfasst ein Aufnahmeelement 207. Die Aufnahmeelemente 207 sind im Aufgabenbereich des Werkers oder der Bedienperson angeordnet. Durch die Aufnahmeelemente wird der Bedienperson das gezielte und ausgerichtete Ablegen der Gebinde erleichtert und einem erhöhten Verschleiß durch die dynamischen Belastungen, beispielsweise Rollenverschleiß der Speicherbahnen, vorgebeugt. Außerdem können Störungen des anschließenden automatischen Transportprozesses durch das gezielte Übergeben der Gebinde verhindert werden. Wenn eine Speicherbahn ein Aufnahmeelement mit Seitenführung umfasst ist es möglich, dass die Speicherbahn selbst keine seitliche Führungselemente umfasst.

Figur 2 illustriert außerdem eine Bedienperson 206 auf einer Arbeitsfläche 204, wobei die Arbeitsfläche 204 zwischen den Verbänden von Gebinden 201 und den Speicherbahnen 203 des Gebindespeichers angeordnet ist. Die Arbeitsfläche 204 kann einen rutschsicheren Bodenbelag aufweisen. Außerdem kann eine Beleuchtung für die Arbeitsfläche 204 vorgesehen sein. Die Arbeitsfläche 204 kann bezüglich des Gebindespeichers und/oder der Verbände von Gebinden 201 höhenverstellbar sein. Dadurch kann die Arbeitshöhe auf die Größe der jeweiligen Bedienperson angepasst werden.

Die Nachschubversorgung mit Verbänden von Gebinden kann durch Staplerhandling oder durch automatische Palettentransportsysteme erfolgen. Zur Steuerung des Nachschubs mit Verbänden von Gebinden sowie zur Bestandsverwaltung des Gebindespeichers kann eine visuelle Beobachtung der Füllstände der Verbände von Gebinden und/oder des Gebindespeichers vorgesehen sein. Die Steuerung des Nachschubs kann ein Anfordern von Verbänden von Gebinden umfassen. Die Steuerung des Nachschubs an Verbände von Gebinden kann teilweise oder vollständig automatisiert erfolgen und kann insbesondere ein automatisches Erkennen der Füllstände der Verbände von Gebinden und/oder des Gebindespeichers umfassen. Dazu können Hilfsmittel wie Listen, Scanner, RFID-Technologie, Terminals, Anzeigeelemente sowie Sprachaus- und eingabesysteme verwendet werden.

## Patentansprüche

1. Verfahren zum Beladen eines Gebindespeichers (102) einer Kommissionieranlage mit Gebinden eines oder mehrerer Getränkeartikel, umfassend die Schritte:
Bereitstellen wenigstens eines Verbandes von Gebinden (101; 201), insbesondere einer Palette, insbesondere wobei der wenigstens eine Verband von Gebinden (101; 201) Gebinde wenigstens eines einzigen Getränkeartikel umfasst; und
Manuelles Beladen des Gebindespeichers (102) mit wenigstens einem Gebinde von dem wenigstens einen Verband von Gebinden (101; 201), insbesondere von einer Palette, durch eine oder mehrere Bedienpersonen (206),
wobei die Kommissionieranlage einen weiteren Verband von Gebinden automatisch oder teilautomatisch aus im Gebindespeicher gespeicherten Gebinden erstellen,
wobei der Gebindespeicher (102) wenigstens eine Speicherbahn (103; 203) umfasst; und wobei die Speicherbahn derart ausgebildet und/oder angeordnet ist, dass ein Gebinde darauf angetrieben und/oder durch das Eigengewicht des Gebindes weitertransportiert werden kann, zu einem vorgesehenen oder vorherbestimmten Bereich der Speicherbahn, **dadurch gekennzeichnet, dass** der Gebindespeicher (102), insbesondere die Speicherbahnen (103; 203) des Gebindespeichers (102), wenigstens ein Aufnahmeelement (207) zum Aufnehmen des wenigstens einen Gebindes von der einen oder mehreren Bedienpersonen (206) umfasst, wobei das wenigstens eine Aufnahmeelement (207) eine seitliche Gebindeführung aufweist.

2. Verfahren nach Anspruch 1, wobei der Gebindespeicher (102) mehrere, vertikal übereinander angeordnete Ebenen umfasst.

3. Verfahren nach einem der vorangegangenen Ansprüche, wobei das Bereitstellen des wenigstens einen Verbandes von Gebinden (101; 201) ein Anfordern des wenigstens einen Verbandes von Gebinden (101; 201), insbesondere durch eine oder mehreren Bedienpersonen (206), umfasst.

4. Verfahren nach einem der vorangegangenen Ansprüche, außerdem umfassend Bereitstellen einer Arbeitsfläche (104; 204) für die eine oder mehreren Bedienpersonen (206), wobei die Arbeitsfläche (104; 204) zwischen dem Gebindespeicher (102) und dem wenigstens einen Verband von Gebinden (101; 201) angeordnet ist.

5. Verfahren nach einem der vorangegangenen Ansprüche, außerdem umfassend ein automatisiertes Weiterverarbeiten der Gebinde nach dem manuellen Beladen.

6. Vorrichtung zum Beladen eines Gebindespeichers (102) einer Kommissionieranlage mit Gebinden eines oder mehrerer Getränkeartikel, umfassend:
eine Bereitstellfläche zum Bereitstellen wenigstens eines Verbandes von Gebinden (101; 201), insbesondere einer Palette, insbesondere wobei der wenigstens eine Verband von Gebinden (101; 201) Gebinde wenigstens eines einzigen Getränkeartikels umfasst; und
eine Arbeitsfläche (104; 204), wobei die Arbeitsfläche (104; 204) derart angeordnet und/oder ausgebildet ist, dass eine oder mehrere Bedienpersonen (206) den Gebindespeicher (102) mit wenigstens einem Gebinde von dem wenigstens einen Verband von Gebinden (101; 201) manuell beladen kann;
wobei der Gebindespeicher (102) wenigstens eine Speicherbahn (103) umfasst; und
wobei die Speicherbahn (103) derart ausgebildet und/oder angeordnet ist, dass ein Gebinde (101; 201) darauf angetrieben und/oder durch das Eigengewicht des Gebindes (101; 201) weitertransportiert werden kann, zu einem vorgesehenen oder vorherbestimmten Bereich der Speicherbahn (103), **dadurch gekennzeichnet, dass**
der Gebindespeicher (102), insbesondere die Speicherbahnen (103; 203) des Gebindespeichers (102), wenigstens ein Aufnahmeelement (207) zum Aufnehmen des wenigstens einen Gebindes von der einen oder mehreren Bedienpersonen (206) umfasst, wobei das wenigstens eine Aufnahmeelement (207) eine seitliche Gebindeführung aufweist.

7. Vorrichtung nach Anspruch 6, wobei der Gebindespeicher (102) mehrere, vertikal übereinander angeordnete Ebenen umfasst.

## Claims

1. A method for loading a pack storing device (102) of an order-picking line with packs of one or a plurality of beverage articles, comprising the steps of:
providing at least one group of packs (101; 201), particularly a pallet, especially the at least one group of packs (101; 201) comprising packs at least of a single beverage article; and
manually loading the pack storing device (102) with at least one pack from the at least one group of packs (101; 201), particularly a pallet, by one or more operators (206),
wherein the order-picking line automatically or partly automatically prepares a further group of packs from packs stored in the pack storing device,
wherein the pack storing device (102) comprises at least one storage lane (103; 203); and
wherein the storage lane is configured and/or arranged such that a pack can be driven thereon and/or further transported by the dead weight of the pack, to an intended or predetermined area of the storage lane,
**characterised in that**
the pack storing device (102), particularly the storage lanes (103; 203) of the pack storing device (102), comprises at least one receiving element (207) for receiving the at least one pack from the one or more operators (206),
wherein the at least one receiving element (207) comprises a lateral pack guiding means.

2. The method according to claim 1, wherein the pack storing device (102) comprises a plurality of vertically superposed planes.

3. The method according to any one of the preceding claims, wherein providing the at least one group of packs (101; 201) comprises requesting the at least one group of packs (101; 201), particularly by one or several operators (206).

4. The method according to any one of the preceding claims, further comprising providing a work area (104; 204) for the one or several operators (206), wherein the work area (104; 204) is arranged between the pack storing device (102) and the at least one group of packs (101; 201).

5. The method according to any one of the preceding claims, further comprising an automated further processing of the packs after manual loading.

6. An apparatus for loading a pack storing device (102) of an order-picking line with packs of one or a plurality of beverage articles, comprising:
a providing area for providing at least one group of packs (101; 201), particularly a pallet, particularly the at least one group of packs (101; 201) comprising packs at least of a single beverage article; and
a work area (104; 204), the work area (104; 204) being arranged and/or configured such that one or several operators (206) can manually load the pack storing device (102) with at least one pack from the at least one group of packs (101; 201);
wherein the pack storing device (102) comprises at least one storage lane (103); and
wherein the storage lane (103) is configured and/or arranged such that a pack (101; 201) can be driven thereon and/or further transported by the dead weight of the pack (101; 201), to an intended or predetermined area of the storage lane (103),
**characterised in that**
the pack storing device (102), particularly the storage lanes (103; 203) of the pack storing device (102), comprises at least one receiving element (207) for receiving the at least one pack from the one or several operators (206),
wherein the at least one receiving element (207) comprises a lateral pack guiding means.

7. The apparatus according to claim 6, wherein the pack storing device (102) comprises a plurality of vertically superposed planes.

## Revendications

1. Procédé destiné à charger un dispositif de stockage tampon de paquets (102) d'une installation de préparation de commandes, avec des paquets d'un ou plusieurs articles de boissons, comprenant les étapes suivantes :
mise à disposition d'au moins un groupement de paquets (101; 201), notamment d'une palette, ledit au moins un groupement de paquets (101; 201) renfermant notamment des paquets d'au moins un seul article de boisson ; et
chargement manuel du dispositif de stockage tampon de paquets (102) avec au moins un paquet dudit au moins un groupement de paquets (101; 201), notamment d'une palette, par une ou plusieurs personnes de service (206),
l'installation de préparation de commandes élaborant de manière automatique ou semi-automatique, un autre groupement de paquets à partir de paquets stockés dans le dispositif de stockage tampon de paquets,
le dispositif de stockage tampon de paquets (102) comprenant au moins une voie de stockage tampon (103; 203) ; et
la voie de stockage tampon étant conçue et/ou agencée de manière à ce qu'un paquet se trouvant dessus puisse être entraîné, et/ou puisse continuer à être transporté par le propre poids du paquet, vers une zone prévue ou prédéterminée de la voie de stockage tampon,
**caractérisé**
**en ce que** le dispositif de stockage tampon de paquets (102), notamment les voies de stockage tampon (103; 203) du dispositif de stockage tampon de paquets (102), comportent au moins un élément de réception (207) destiné à recevoir ledit au moins un paquet de ladite une ou des dites plusieurs personnes de service (206), ledit au moins un élément de réception (207) présentant un guidage latéral de paquet.

2. Procédé selon la revendication 1, d'après lequel le dispositif de stockage tampon de paquets (102) comprend plusieurs plans agencés verticalement les uns au-dessus des autres.

3. Procédé selon l'une des revendications précédentes, d'après lequel la mise à disposition dudit au moins un groupement de paquets (101; 201) comprend la demande dudit au moins un groupement de paquets (101; 201), formulée notamment par une ou plusieurs personnes de service (206).

4. Procédé selon l'une des revendications précédentes, comprenant, en outre, la mise à disposition d'une surface de travail (104; 204) pour ladite une ou les plusieurs personnes de service (206), la surface de travail (104; 204) étant agencée entre le dispositif de stockage tampon de paquets (102) et ledit au moins un groupement de paquets (101; 201).

5. Procédé selon l'une des revendications précédentes, comprenant, en outre, une poursuite de traitement automatisée des paquets, après le chargement manuel.

6. Ensemble destiné à charger un dispositif de stockage tampon de paquets (102) d'une installation de préparation de commandes, avec des paquets d'un ou plusieurs articles de boissons, comprenant :
une surface de mise à disposition d'au moins un groupement de paquets (101; 201), notamment d'une palette, ledit au moins un groupement de paquets (101; 201) renfermant notamment des paquets d'au moins un seul article de boisson ; et
une surface de travail (104; 204), la surface de travail (104; 204) étant agencée et/ou conçue de manière à ce qu'une ou plusieurs personnes de service (206) puissent charger manuellement le dispositif de stockage tampon de paquets (102) avec au moins un paquet dudit au moins un groupement de paquets (101; 201) ;
le dispositif de stockage tampon de paquets (102) comprenant au moins une voie de stockage tampon (103) ; et
la voie de stockage tampon (103) étant conçue et/ou agencée de manière à ce qu'un paquet (101; 201) se trouvant dessus puisse être entraîné, et/ou puisse continuer à être transporté par le propre poids du paquet (101; 201), vers une zone prévue ou prédéterminée de la voie de stockage tampon (103),
**caractérisé**
**en ce que** le dispositif de stockage tampon de paquets (102), notamment les voies de stockage tampon (103; 203) du dispositif de stockage tampon de paquets (102), comportent au moins un élément de réception (207) destiné à recevoir ledit au moins un paquet de ladite une ou des dites plusieurs personnes de service (206), ledit au moins un élément de réception (207) présentant un guidage latéral de paquet.

7. Ensemble selon la revendication 6, dans lequel le dispositif de stockage tampon de paquets (102) comprend plusieurs plans agencés verticalement les uns au-dessus des autres.
